(19) Europäisches Patentamt
European Patent Office
Office européen des brevets

(11) **EP 4 015 467 A1**

(12) **EUROPÄISCHE PATENTANMELDUNG**

(43) Veröffentlichungstag:
**22.06.2022 Patentblatt 2022/25**

(21) Anmeldenummer: **20214491.1**

(22) Anmeldetag: **16.12.2020**

(51) Internationale Patentklassifikation (IPC):
**C03B 19/14** (2006.01) **C03B 20/00** (2006.01)

(52) Gemeinsame Patentklassifikation (CPC):
**C03B 19/1423;** C03B 2207/06; C03B 2207/32

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Heraeus Quarzglas GmbH & Co. KG
63450 Hanau (DE)**

(72) Erfinder:
• **Thürer, Martin
63450 Hanau (DE)**
• **Lehmann, Walter
63450 Hanau (DE)**
• **Trommer, Martin
63450 Hanau (DE)**

(74) Vertreter: **Gille Hrabal Partnerschaftsgesellschaft
mbB
Patentanwälte
Brucknerstraße 20
40593 Düsseldorf (DE)**

(54) **VERFAHREN ZUR HERSTELLUNG VON SYNTHETISCHEM QUARZGLAS**

(57) Beschrieben wird ein Verfahren zur Herstellung von synthetischem Quarzglas, bei welchem der Einsatzmaterialdampf aus einer siliziumorganischen Ausgangsverbindung und eventuell brennbarer Brenner-Hilfsgase bei einer Luftzahl im Brenner von kleiner gleich 1,00 umgesetzt wird. Des Weiteren betrifft die vorliegende Erfindung eine entsprechende Vorrichtung.

Figur 1:

EP 4 015 467 A1

**Beschreibung**

Die vorliegende Erfindung betrifft ein Verfahren zur Herstellung von synthetischem Quarzglas sowie eine entsprechende Vorrichtung zur Durchführung des erfindungsgemäßen Verfahrens.

Zur Herstellung von synthetischem Quarzglas werden aus einer siliziumhaltigen Ausgangssubstanz in einem CVD-Verfahren durch Hydrolyse oder Oxidation $SiO_2$-Teilchen erzeugt und auf einem sich bewegenden Träger abgeschieden. Es kann dabei zwischen Außen- und Innenabscheideverfahren unterschieden werden. Bei Außenabscheideverfahren werden die $SiO_2$-Teilchen auf der Außenseite eines rotierenden Trägers aufgebracht. Als Beispiele für entsprechende Außenabscheideverfahren seien das so genannte OVD-Verfahren (Outside Vapour Phase Deposition), das VAD-Verfahren (Vapour Phase Axial Deposition) oder das PECVD-Verfahren (Plasma Enhanced Chemical Vapour Deposition) genannt. Als bekanntestes Beispiel für ein Innenabscheideverfahren steht das MCVD-Verfahren (Modified Chemical Vapour Deposition), bei dem auf der Innenwandung eines von außen erhitzten Rohres $SiO_2$-Teilchen abgeschieden werden.

Bei hinreichend hoher Temperatur im Bereich der Trägeroberfläche kommt es zu einem unmittelbaren Verglasen der $SiO_2$-Teilchen, was auch als "Direktverglasen" bekannt ist. Im Unterschied dazu ist beim so genannten "Sootverfahren" die Temperatur beim Abscheiden der $SiO_2$-Teilchen so niedrig, dass eine poröse $SiO_2$-Sootschicht erhalten wird, die dann in einem separaten Verfahrensschritt zu transparentem Quarzglas gesintert wird. Sowohl das Direktverglasen als auch das Sootverfahren führen zu einem dichten, transparenten, hochreinen, synthetischen Quarzglas.

In den Verfahren des Standes der Technik zur Herstellung von synthetischem Quarzglas wird in der Regel eine Verfahrensweise angewendet, um eine ausreichende Abscheideeffizienz der $SiO_2$-Teilchen zu gewährleisten, wobei unter Abscheideeffizienz der Quotient aus dem Gewicht des erzeugten Sootkörpers und der rechnerisch maximal erzeugbaren Gesamtmenge an $SiO_2$ unter der Annahme einer vollständigen Umsetzung des Siliziums aus der eingesetzten siliziumhaltigen Ausgangsverbindung verstanden wird. Zu diesen üblicherweise verwendeten Bedingungen zählt zunächst einmal ein möglichst stöchiometrisches Verhältnis von Sauerstoff zu Brennstoff (= siliziumhaltige Ausgangssubstanz + Brenngase, z.B. für die Pilotflamme), damit eine im Wesentlichen vollständige Umsetzung zu dem gewünschtem Zielprodukt gewährleistet wird. Darüber hinaus bewirkt ein stöchiometrisches Verhältnis von Sauerstoff zu den oxidierbaren Ausgangssubstanzen, d.h. ein Verfahren mit einer Luftzahl von 1, eine hohe Umsetzungstemperatur, was ebenfalls für die Effizienz des Verfahrens bevorzugt sein soll. Die Verbrennung der siliziumhaltigen Ausgangssubstanz erfolgt im Stand der Technik regelmäßig mit einer turbulenten Flamme, die für eine gute Durchmischung der einzelnen Gase (insbesondere Sauerstoff und siliziumhaltige Ausgangsverbindung) sorgt und gleichzeitig eine rasche Umsetzung zu dem gewünschten Siliziumdioxid bewirkt. Dabei wird eine Kohlenstoffrußbildung in der Flamme möglichst vermieden, um Kohlenstoffrußabscheidungen auf dem resultierenden Sootkörper zu vermeiden. Schließlich sind die Verfahren des Standes der Technik durch einen bestimmten Mindestabstand des verwendeten Brenners von der Abscheideoberfläche, um das zu $SiO_2$ umgesetzte Material möglichst vollständig am Sootkörper auffangen zu können.

Ein entsprechendes Verfahren zur Herstellung von synthetischem Quarzglas ist beispielsweise in WO 90/10596 A beschrieben, wobei einhergehend mit den vorstehenden Erläuterungen mit einem Sauerstoffüberschuss und damit mit einer Luftzahl von größer 1 gearbeitet wird.

US 2019/0084866 A beschreibt ein Verfahren zur Herstellung von synthetischem Quarzglas, in welchem eine siliziumhaltige Ausgangsverbindung mit Sauerstoff vermischt wird und als Einsatzmaterial einem Brenner zugeführt wird. Es wird dabei ausgeführt, dass der Sauerstoff in der Mischung mit der siliziumhaltigen Ausgangsverbindung in dem Einsatzmaterial unterstöchiometrisch vorliegt, damit ein vorzeitiges Zünden der Mischung aus siliziumhaltiger Ausgangsverbindung und Sauerstoff vermieden wird. Das unterstöchiometrische Verhältnis von Sauerstoff zur siliziumhaltigen Ausgangsverbindung bezieht sich aber nur auf den Feedstrom der Mischung aus siliziumhaltiger Ausgangsverbindung und Sauerstoff. Die Gesamtmenge an zugeführtem Sauerstoff, d.h. die Menge an Sauerstoff, die zusammen mit der siliziumhaltigen Ausgangsverbindung und separat dem Brenner zugeführt wird, ist, bezogen auf die siliziumhaltigen Ausgangsverbindung, überstöchiometrisch.

DE 10 2011 121 153 A beschreibt ebenfalls ein Sootverfahren zur Herstellung von synthetischem Quarzglas, bei welchem ein Einsatzmaterial, umfassend eine kohlenstoffhaltige Siliziumverbindung, mit Sauerstoff in einer Reaktionszone zu $SiO_2$-Teilchen umgesetzt wird, die $SiO_2$-Teilchen dann auf einer Ablagerungsfläche unter Bildung eines Kohlenstoff- und Hydroxylgruppen-enthaltenden, porösen $SiO_2$-Sootkörpers abgeschieden werden, der poröse $SiO_2$-Sootkorpers getrocknet und anschließend verglast wird. Die DE 102011 121 153 A stellt dabei fest, dass die Abscheideeffizienz der siliziumhaltigen Ausgangssubstanz Octamethylcyclotetrasiloxan (OMCTS) verbessert wird, wenn mit einer Luftzahl von weniger als 1, d.h. mit einem Unterschuss an Sauerstoff bis zu einer Luftzahl $\lambda$ von 0,95 (Luftzahl = theoretisch für vollständige Umsetzung aller brennbaren Gase benötigter Sauerstoff / tatsächlich aktiv dem Brenner zugeführter Sauerstoff), gearbeitet wird. Würde man ausgehend von der DE 10 2011 121 153 A dem Trägergas-OMCTS-Strom jedoch noch weiteren Sauerstoff zuführen, würde dieses unweigerlich zu einer Erhöhung der Luftzahl führen und der Fachmann wird davon ausgehen, dass die in der DE 10 2011 121 153 A beschriebene Vorteile nicht erreicht werden. Darüber hinaus ist die höhere Aufbaurate in der DE 10 2011 121 153 A auf die reduzierte mittlere Gasgeschwindigkeit durch weniger Sauerstoffzugabe und damit einhergehend mit einer längeren Verweilzeit der $SiO_2$-Teilchen in der Nähe der Abscheideoberfläche verbunden Insgesamt sind die Verfahren des Standes der Technik im Hinblick auf die Abscheideeffizienz des siliziumhaltigen Ausgangsmaterials immer noch verbesserungswürdig und es besteht daher Bedarf nach einem Verfahren zur Herstellung von synthetischem Quarzglas, mit welchem die Abscheideeffizienz des siliziumhaltigen Ausgangsmaterials verbessert werden kann. Mit einer verbesserten Abscheideeffizienz gehen geringe Herstellungskosten für das synthetische Quarzglas einher.

Gelöst wird diese Aufgabe erfindungsgemäß nun durch ein Verfahren zur Herstellung von synthetischem Quarzglas, welches zunächst durch die die folgenden Verfahrensschritte gekennzeichnet ist:

(1) Verdampfen eines Einsatzmaterials, das mindestens eine siliziumorganische Ausgangsverbindung enthält, unter Bildung eines Einsatzmaterialdampfes;

(2) Zuführen des Einsatzmaterialdampfes aus Verfahrensschritt (1) zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Soot-teilchen umgesetzt wird;

(3) Abscheiden der aus Verfahrensschritt (2) resultierenden $SiO_2$-Sootteilchen auf einer Ablagerungsfläche unter Ausbildung eines Sootkörpers; und

(4) gegebenenfalls Trocknen und Verglasen des aus Verfahrensschritt (3) resultierenden Sootkörpers unter Bildung von synthetischem Quarzglas.

Das erfindungsgemäße Verfahren ist dann dadurch gekennzeichnet, dass die im Verfahrensschritt (2) durchzuführende Umsetzung des Einsatzmaterialdampfs bei einer Luftzahl im Brenner von kleiner gleich 1,00 durchgeführt wird.

Im Rahmen der vorliegenden Erfindung wird im Verfahrensschritt (2) der Einsatzmaterialdampf gegebenenfalls mit einem oder mehreren weiteren Hilfsgasen verwendet.

Erfindungsgemäß ist somit vorgesehen, dass die Gasströme in dem Brenner der erfindungsgemäßen Vorrichtung, d.h. das Verhältnis von Sauerstoff aus dem Brenner (inkl. Feed-Sauerstoff) zu allen brennbaren Stoffen, die dem Brenner aktiv (d.h. unter Druck) zugeführt werden, so eingestellt werden, dass eine Luftzahl für alle dem Brenner aktiv (d.h. unter Druck) zugeführten Gase kleiner oder gleich 1 realisiert wird.

Die Luftzahl $\lambda$ ist definiert als das Verhältnis der tatsächlich zur Verfügung stehenden Sauerstoffmenge zur mindestens notwendigen Sauerstoffmenge, die für eine stöchiometrisch vollständige Verbrennung theoretisch benötigt wird.

Im Rahmen der vorliegenden Erfindung wird unter der Gesamtmenge an Sauerstoff, die zur Umsetzung der siliziumorganischen Ausgangsverbindung und des Hilfsgases ($H_2$) im Brenner (allenfalls) stöchiometrisch verwendet wird, die Menge an Sauerstoff verstanden, welche dem Brenner unter Druck aktiv zugeführt wird. Aus dieser Definition der Gesamtmenge an Sauerstoff ergibt sich, dass die Menge an Sauerstoff, die dem Brenner passiv (d.h. drucklos) zugeführt wird, zu der erfindungsgemäß vorgesehenen Gesamtmenge an Sauerstoff nicht hinzugerechnet wird. Damit wird insbesondere Sauerstoff ausgeschlossen, welcher während der Verbrennung der siliziumorganischen Ausgangsverbindung aus der dem Brenner umgebenden Atmosphäre in die Flamme eindiffundiert.

Darüber hinaus wird unter der Menge an Sauerstoff, die zur Umsetzung der siliziumorganischen Ausgangsverbindung und gegebenenfalls der brennbaren Hilfsgase im Brenner (allenfalls) stöchiometrisch verwendet wird, die Gesamtmenge an Sauerstoff verstanden, die dem Brenner zentral zugeführt wird.

Unter dem Begriff von zentral dem Brenner zugeführtem Sauerstoff wird bei einem konzentrischen Brenner diejenige Menge an Gesamtsauerstoff verstanden, die auf der Flammenseite des Brenners diesen in einem Oberflächenbereich aktiv verlässt, wobei der Oberflächenbereich gebildet wird durch eine im Wesentlichen kreisförmige Fläche mit einem Radius r, wobei sich der Radius r senkrecht zur Richtung der Bait-Rod-Drehachse von dem Zentrum der Stoffdüse oder dem Mittelpunkt des Stoffdüsenensembles (Düse(n) zur Einspeisung der siliziumorganischen Ausgangsverbindung) erstreckt und der Radius r etwa 1/5 des mittleren Abstands der Stoffdüse(n) zur Abscheideoberfläche des gebildeten Sootkörpers entspricht.

Unter dem Begriff von zentral dem Brenner zugeführtem Sauerstoff wird bei einem Linearbrenner diejenige Menge an Gesamtsauerstoff verstanden, die auf der Flammenseite des Brenners diesen in einem Oberflächenbereich aktiv verlässt, wobei der Oberflächenbereich gebildet wird durch eine Fläche, die einen Anstand d senkrecht zur Richtung der Bait-Rod-Drehachse von dem Zentrum der Stoffdüse oder der Mittellinie des Stoffdüsenensembles (Düse(n) zur Einspeisung der siliziumorganischen Ausgangsverbindung) aufweist und der Abstand d etwa 1/5 des mittleren Abstands der Stoffdüse(n) zur Abscheideoberfläche des gebildeten Sootkörpers entspricht.

Die (allenfalls) stöchiometrische Verwendung von Sauerstoff wird vorzugsweise während der vollständigen Aufbauzeit des Sootkörpers eingehalten, wobei unter der Aufbauzeit die Zeitdauer der Zuführung der siliziumorganischen Ausgangsverbindung in das erfindungsgemäße Verfahren

$$t_{Aufbauzeit} = \Delta t_{Start-Ende\ Zuführung\ siliziumhaltige\ Ausgangsverbindung}$$

verstanden wird.

Im Rahmen der vorliegenden Erfindung ergibt sich die Abscheideeffizienz durch den Quotienten aus dem Gewicht des erzeugten Sootkörpers und der rechnerisch maximal erzeugbaren Gesamtmenge an $SiO_2$ unter der Annahme einer vollständigen Umsetzung des Siliziums aus der eingesetzten siliziumorganischen Ausgangsverbindung.

Die Anwendung einer Luftzahl von kleiner gleich 1 bei der Verbrennung führt im Rahmen der vorliegenden Erfindung zu den nachfolgend diskutierten technischen Effekten.

Die Verwendung von einem fetten Brenngemisch (einhergehend mit einer Luftzahl von kleiner gleich 1) führt zu einem späteren, lokalen Zünden nur der Randgebiete der Flamme, in welchen bereits genug Brennergas-$O_2$ aus der (oder den) äußeren Düse(n) eindiffundiert ist. Der Kernbereich der Flamme ist durch das zu fette Gemisch zündunwilliger. Dadurch zündet nur ein kleineres Gasvolumen gleichzeitig und der Sauerstoff muss erst nachdiffundieren. Dadurch wird die Expansion der heißen Verbrennungsgase von Gebieten, die durchgezündet haben, in andere Flammenbereiche vermieden und die die Flamme weniger turbulent.

Das Gasvolumen, das über eine brennbare Mischung verfügt, erstreckt sich bei der erfindungsgemäßen Verfahrensweise weit nach oben und hat eine geringere laterale Ausdehnung. Das führt zu einer laminareren Flamme. Die damit einhergehende Auswirkung ist, dass die schmalere, laminarere Flamme sich besser an den Sootkörper anlegt und einen stabileren Staupunkt direkt unter dem Sootkörper ausbildet. Dieses führt zu kürzeren Diffusionswegen für die $SiO_2$-Teilchen zur Abscheidungsoberfläche des Sootkörpers und erhöht die Verweilzeit im Staupunkt, was insgesamt eine höhere Abscheideeffizienz bewirkt.

Darüber hinaus ergibt sich durch die unterstöchiometrische Verwendung von Sauerstoff zusätzlich eine gelb leuchtende Flammenseele aus Kohlenstoffruß mit einem Sauerstoffmangel im Zentrum der Flamme.

Bei dem erfindungsgemäßen Verfahren handelt es sich insbesondere um ein Outside Vapor Deposition Method (OVD)-Verfahren, Vapor Axial Deposition (VAD)-Verfahren oder ein Soot-Boule-Verfahren. Entsprechende OVD- und VAD-Verfahren sind dem Fachmann hinlänglich bekannt und ein Soot-Boule-Verfahren ist beispielsweise bekannt aus der US 8,230,701.

Im Nachfolgenden werden die einzelnen Verfahrensschritte des erfindungsgemäßen Verfahrens näher beschrieben:

**Verfahrensschritt (1) - Verdampfen des Einsatzmaterials**

Im Verfahrensschritt (1) wird ein Einsatzmaterial, das mindestens eine siliziumorganische Ausgangsverbindung enthält, unter Bildung eines Einsatzmaterialdampfes verdampft. Bei der siliziumorganischen Ausgangsverbindung handelt es sich bevorzugt um eine Polyalkylsiloxanverbindung.

Grundsätzlich kann erfindungsgemäß jede Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch zyklische Molekularstrukturen.

Besonders geeignete cyclische Vertreter sind Polyalkylsiloxane mit der allgemeinen Summenformel

$$Si_pO_p(R)_{2p},$$

wobei p eine ganze Zahl größer gleich 3 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Decamethylcyclopentasiloxan (D5), Dodecamethylcyclohexasiloxan (D6), Tetradekamethylcycloheptasiloxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der "D" die Gruppe [(CH$_3$)2Si]-O- repräsentiert.

Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt.

Grundsätzlich ist es möglich, dass das Einsatzmaterial vor dem Einbringen in Verfahrensschritt (1) einer Aufreinigung unterzogen wird. Dem Fachmann sind solche Aufreinigungsverfahren bekannt. In einer bevorzugten Ausführungsform wird das Einsatzmaterial jedoch zuvor keinem vorgeschaltetem Aufreinigungsverfahren unterzogen.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der siliziumorganischen Ausgangsverbindung erfolgen kann. Dies bedeutet, dass der Einsatzmaterialdampf bevorzugt zusätzlich ein Trägergas umfasst. Eine solche Vorgehensweise ist bevorzugt, wenn die Verdampfung des Einsatzmaterials unterhalb seines Siedepunktes stattfinden soll. Das Inertgas ist bevorzugt chemisch inert und ist bevorzugt Stickstoff oder Argon. Dabei liegt das Molverhältnis der siliziumorganischen Ausgangsverbindung zum Trägergas bevorzugt im Bereich von 0,01 bis 2; besonders bevorzugt im Bereich von 0,02 bis 1,5 und ganz besonders bevorzugt im Bereich von 0,05 bis 1,25. Insbesondere ist es bevorzugt, dass als Trägergas Stickstoff mit Feuchtegehalt < 40 Volumen-ppm eingesetzt wird und als siliziumorganische Ausgangsverbindung OMCTS. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die siliziumorganische Ausgangsverbindung je nach gewähltem molekularem Verhältnis der siliziumorganischen Ausgangsverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der siliziumorganischen Ausgangsverbindung sein. Der Taupunkt ist wiederum abhängig vom gewählten molekularen Verhältnis aus siliziumorganischer Ausgangsverbindung und Trägergas. In einem bevorzugten Ausführungsverfahren wird dazu die siliziumorganische Ausgangsverbindung vor der Verdampfung auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunktstemperatur der Mischung aus siliziumorganischer Ausgangsverbindung und Trägergas liegt. Geeignete Verdampfungsverfahren werden z. B. in den Internationalen Patentanmeldungen WO 2013/087751 A und WO 2014/187513 A sowie der deutschen Patentanmeldung DE 10 2013 209 673 beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Bei der Verwendung von Temperaturen unterhalb des Siedepunkts des Einsatzmaterials erfolgt die Verdampfung bevorzugt zusammen mit einem inerten Trägergas.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der siliziumorganischen Ausgangsverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird im Verfahrensschritt (1) bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.-% gasförmige Bestandteile enthält.

Die dampfförmige siliziumorganische Ausgangsverbindung bzw. ein Gemisch aus Trägergas und dampfförmiger siliziumorganischer Ausgangsverbindung wird üblicherweise der Verdampfungskammer entnommen und in einen Brenner geleitet. Vor dem Einleiten in den Brenner wird das dampfförmige Material bzw. die Mischung aus dampfförmigem Material und Trägergas vorzugweise mit Sauerstoff gemischt. In der Flamme wird die siliziumorganische Ausgangsverbindung zu $SiO_2$ oxidiert. Es bildet sich feinteiliges, amorphes $SiO_2$ ($SiO_2$-Ruß), das in Form einer porösen Masse zunächst auf der Oberfläche eines Trägers und später auf der Oberfläche des sich bildenden Sootkörpers abgeschieden wird.

**Verfahrensschritt (2) - Zuführen des Einsatzmaterialdampfes zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Sootpartikeln umgesetzt wird**

Im Verfahrensschritt (2) wird der aus Verfahrensschritt (1) resultierende gasförmige Einsatzmaterialdampf zu einer Reaktionszone geführt, in dem der Einsatzmaterialdampf durch Oxidation und/oder oder durch Hydrolyse zu $SiO_2$-Teilchen umgesetzt wird.

Dieser Verfahrensschritt entspricht insbesondere dem bekannten Sootverfahren. Die mögliche Ausgestaltung dieses allgemeinen Verfahrens ist dem Fachmann bekannt.

Für die Verbrennung des Einsatzmaterialdampfs wird üblicherweise ein konzentrischer Brenner verwendet, der um den Mittelpunkt des Brennermunds kreisförmig angeordnete Gasaustrittsdüsen aufweist.

Erfindungsgemäß wurde herausgestellt, dass in der Regel die Erniedrigung der Luftzahl nicht ausreichend ist, um die gewünschte Abscheideeffizienz zu erzielen und gleichzeitig einen Sootkörper zu erhalten, der im Wesentlichen frei von Kohlenstoffablagerungen ist. Wenn man beispielsweise die Luftzahl in dem Verfahren gemäß DE 10 2011 121 153 A unter die dort in den Ausführungsbeispielen angewendete Luftzahl erniedrigt, erhält man einen Sootkörper, der einen zu hohen Anteil an Kohlenstoffanlagerungen aufweist. Daher schlägt die vorliegende Erfindung - im grundlegenden Unterschied zu der Offenbarung der DE 10 2011 121 153 A - vorzugsweise noch mindestens eine weitere Verfahrensänderung vor, die nachfolgend erläutert wird.

Die Mitteldüse (innere Düse) bei dem erfindungsgemäß vorzugsweise zu verwendenden Brenner dient in der Regel zum Zuführen des Einsatzmaterialdampfs, welcher im Rahmen der vorliegenden Erfindung üblicherweise mit einem Trägergas vorgemischt verwendet wird. Darüber hinaus wird dem Einsatzmaterialdampf vorzugsweise Sauerstoff zugesetzt, so dass aus der Mitteldüse des üblicherweise verwendeten konzentrischen Brenners ein Feedstrom resultiert, der neben dem Einsatzmaterialdampf noch das Trägergas und Sauerstoff enthält.

In einer bevorzugten Ausführungsform der vorliegenden Erfindung wird die siliziumorganische Ausgangsverbindung zusammen in einem Feed mit Sauerstoff in den Brenner geführt.

Durch diese modifizierte Verfahrensweise gegenüber der Offenbarung der DE 10 2011 121 153 A ist es möglich, die Luftzahl in dem gattungsgemäßen Verfahren unter die in dem Stand der Technik definierten Bereich zu senken und damit die Ausbeuteeffizienz zu steigern ohne gleichzeitig einen Sootkörper zu erhalten, der einen zu hohen Anteil an Kohlenstoffablagerungen aufweist.

Damit unterschiedet sich diese bevorzugte erfindungsgemäße Verfahrensweise erheblich von dem Verfahren, welches in der DE 10 2011 121 153 A beschrieben ist, die zwar empfiehlt, eine fette Brennstoffmischung, d.h. einen Überschuss an $SiO_2$-Ausgangsverbindung und somit einen Unterschuss an Sauerstoff, zu verwenden, aber keine Offenbarung enthält, wie man die gleichzeitig verursachte vermehrte Kohlenstoffablagerung auf dem Sootkörper vermeiden kann. Der Fachmann, der ausgehend von der Lehre der DE 10 2011 121 153 A die Abscheideeffizienz des gattungsgemäßen Verfahrens verbessern möchte, würde den Brennersauerstoff noch weiter reduzieren, aber dann an der zu großen Menge unverbranntem Kohlenstoff im Sootkörper scheitern. Die Realisierung erfindungsgemäß geringer Luftzahlen ist nur möglich, indem dem Feedstrom zusätzlicher Sauerstoff hinzugefügt wird bei einer insgesamt reduzierten Gesamtmenge an Sauerstoff.

Im Rahmen der vorliegenden Erfindung sind auch andere Brennerformen als ein konzentrischer Brenner verwendbar; in diesen Fällen wird in Übereinstimmung mit den vorstehenden neuen Erkenntnissen die siliziumorganische Ausgangsverbindung vorzugsweise Sauerstoff, gegebenenfalls zusammen mit einem Trägergas, in den Brennerraum geführt (unabhängig von dem Ort der Zuführung der siliziumorganischen Ausgangsverbindung).

Die Mitteldüse des Brenners (innere Düse) wird in der Regel von einer zweiten Düse, die konzentrisch um die Mitteldüse angeordnet ist, umfasst und aus welcher ein Trenngas in den Brenner eingeführt wird. Dieses Trenngas trennt die sauerstoffhaltige $SiO_2$-Ausgangsverbindung von dem weiteren Sauerstoffstrom, der aus einer weiteren konzentrisch um die Mitteldüse und die Trenngasdüse angeordnete konzentrische Düse in den Brenner einströmt.

Als Trenngas wird vorzugsweise ein Gas verwendet, welches im Allgemeinen mehr als 5 Vol.-% Wasserstoff, insbesondere mehr als 10 Vol.-% Wasserstoff, insbesondere mehr als 20 Vol.-% Wasserstoff, insbesondere mehr als 30 Vol.-% Wasserstoff, insbesondere mehr als 40 Vol.-% Wasserstoff, insbesondere mehr als 50 Vol.-% Wasserstoff, insbesondere mehr als 60 Vol.-% Wasserstoff, insbesondere mehr als 70 Vol.-% Wasserstoff, insbesondere mehr als 80 Vol.-% Wasserstoff, insbesondere mehr als 90 Vol.-% Wasserstoff, insbesondere mehr als 95 Vol.-% Wasserstoff, insbesondere mehr als 98 Vol.-% Wasserstoff, insbesondere mehr als 99 Vol.-% Wasserstoff, aufweist.

Bevorzugt wird im Wesentlichen reiner Wasserstoff als Trenngas verwendet.

Im Rahmen der vorliegenden Erfindung kann es vorgesehen sein, dass der Abstand zwischen dem Brenner und der Oberfläche des Sootkörpers während des Abscheidevorgangs angepasst wird. Zu diesem Zweck ist es grundsätzlich möglich, die Position des Brenners und/oder des Sootkörpers zu verändern, wobei in einer bevorzugten Ausführungsform der Brenner bewegt wird, während die Position der Drehachse des Sootkörpers ortsfest bleibt

Bei einem Abscheidebrenner mit bündig am Brennermund abschließenden Düsen ergibt sich der Abstand zwischen Abscheidebrenner und Ablagerungsfläche der Sootteilchen als kürzeste Strecke zwischen Brennermund und der Oberflache des sich bildenden Sootkörpers. Andernfalls wird dieser Abstand definiert als der die kürzeste Strecke zwischen der Düsenöffnung derjenigen Düse, durch welche das mengenmäßig wichtigste Glasausgangsmaterial geleitet wird und der Oberfläche des sich bildenden Sootkörpers. Dabei handelt es sich in der Regel um die zentrale Düse (Mitteldüse) einer bevorzugt verwendeten konzentrischen Brennerform.

Die mittels des Abscheidebrenners erzeugten $SiO_2$-Sootteilchen werden üblicherweise auf einem um seine Längsachse rotierenden Trägerrohr abgeschieden, so dass schichtweise der Sootkörper aufgebaut wird. Hierzu kann der Abscheidebrenner entlang der Längsachse des Trägerrohrs zwischen zwei Wendepunkten hin- und herbewegt werden. Darüber hinaus ist die Verwendung von einem Brennerblock bevorzugt, in welchem sich mehrere Abscheidebrenner mit jeweils einer Flamme befinden. In dem Fall der Verwendung eines Brennerblocks wird zumindest einer der Brenner im Sinne der vorliegenden Erfindung, vorzugsweise alle Brenner, betrieben, d.h. dass die erfindungsgemäße Luftzahl für zumindest einen der Brenner, vorzugsweise für alle Brenner, eingehalten wird und dass der Abstand zwischen jedem der Brenner und der Oberfläche des Sootkörpers entsprechend der erfindungsgemäßen Überlegung zumindest für einen der Brenner, vorzugsweise für alle Brenner eingestellt wird.

Im Rahmen der vorliegenden Erfindung wurde, wie bereits eingangs beschrieben, festgestellt, dass es für die Ausbeuteeffizienz günstig ist, wenn die Luftzahl, d.h. das Verhältnis von Sauerstoff zu Einsatzmaterial, kleiner gleich 1 ist. Erfindungsgemäß ist daher weiter bevorzugt vorgesehen, dass Sauerstoff im Verfahrensschritt (2) vorzugsweise unterstöchiometrisch im Verhältnis zu dem zu hydrolysierenden und/oder polymerisierenden Einsatzmaterialdampf und eventueller brennbarer Hilfsgase verwendet wird.

Insbesondere sind in dem erfindungsgemäßen Verfahren Luftzahlen bevorzugt, die kleiner gleich 0,95, noch weiter bevorzugt kleiner gleich 0,90, noch weiter bevorzugt kleiner gleich 0,85, noch weiter bevorzugt kleiner gleich 0.80, noch weiter bevorzugt kleiner gleich 0,78, noch weiter bevorzugt kleiner gleich 0,76, sind.

Die vorstehende Luftzahl wird vorzugsweise während mindestens 20 %, weiter bevorzugt mindestens 30 %, noch weiter bevorzugt mindestens 40 %, noch weiter bevorzugt mindestens 50 %, noch weiter bevorzugt mindestens 60 %, noch weiter bevorzugt mindestens 70 %, noch weiter bevorzugt mindestens 80 %, noch weiter bevorzugt mindestens 90 %, noch weiter bevorzugt mindestens 95 %, noch weiter bevorzugt mindestens 97 %, noch weiter bevorzugt mindestens 98 %, noch weiter bevorzugt mindestens 99 %, der zuvor definierten Aufbauzeit in dem erfindungsgemäßen Verfahren eingehalten.

DE 10 2011 121 153 A offenbart als kleinste konkrete Luftzahl bei der Quarzglas-Herstellung 0,952. Der Fachmann würde daher nicht erwarten, dass niedrigere Luftzahlen, die mit einem deutlich größeren Sauerstoffmangel als in der DE 10 2011 121 153 A offenbart einhergehen, zu den erfindungsgemäßen Effizienzsteigerungen bei der Abscheidung von $SiO_2$-Teilchen führen, und dass die Effizienzsteigerungen sich erreichen lassen, obwohl man den Strom an siliziumorganischer Ausgangsverbindung, welche in den Brenner geführt wird, zusätzlich mit Sauerstoff anreichert.

Die herabgesetzte Zündfähigkeit in der insgesamt fetteren Gasanordnung bewirkt zusätzlich eine Verkleinerung des durchschnittlichen Durchmessers der Gasregionen, die gleichzeitig zünden (kleinere "Flamelets"). Die weniger starke Volumenerhöhung durch thermische Expansion und Molgewinn (beispielsweise erzeugt beispielsweise 1 mol OMCTS-Gas das x-fache an Molen Verbrennungsgase) durch Zersetzung erzeugt kleinere Druckwellen, die die Flamme weniger turbulenter machen. Damit resultiert eine laminarere Flamme mit höherer Ausbrennlänge mit den zuvor beschrieben Vorteilen. Dabei ist zu berücksichtigen, dass im Brenner- und Flammenzentrum bei der erfindungsgemäßen Verfahrensweise nur Feedstrom und Wasserstoffvorliegen, die gemeinsam zu fett sind, um schnell zu zünden und dass der Sauerstoff der äußeren Düse wegen geringerer Turbulenz erst später ins Zentrum, verteilt auf eine längere Wegstrecke, gelangt.

Da im Rahmen der vorliegenden Erfindung das Einsatzmaterial vorzugsweise zusammen mit einem Trägergas und Sauerstoff aus der Mitteldüse des vorzugsweise konzentrischen Brenners in die Brennzone abgegeben wird, ist zu berücksichtigen, dass sich die Menge an Sauerstoff zur Berechnung der Luftzahl aus der Beimengung des Sauerstoffs in den Strom des Einsatzmaterials und dem zusätzlich als Brenngas verwendeten Sauerstoff ergibt.

Im Rahmen des erfindungsgemäßen Verfahrens kann die Luftzahl deutlich unter den von der DE 10 2011 121 153 A definierten Wert reduziert werden und gleichzeitig die Abscheideeffizienz deutlich erhöht werden.

Bei einer beispielsweisen Luftzahl von 0,85 ist in der erfindungsgemäßen Verfahrensweise das Sauerstoffdefizit dreimal höher (15%) und bei einer beispielsweisen Luftzahl von 0,75 fünfmal höher (25%) als bei der aus der DE 10 2011 121 153 bekannten Verfahrensweise mit einer Luftzahl von 0,95 und einem Sauerstoffdefizit von nur 5%.

Des Weiteren ist das erfindungsgemäße Verfahren vorzugsweise dadurch gekennzeichnet, dass es eine bestimmte Partikelgrößenverteilung des Excess-Soots aufweist, welche dann vorzugsweise für Sekundärprodukte genutzt werden kann

## Verfahrensschritt (3) - Abscheiden der $SiO_2$-Teilchen

Im Verfahrensschritt (3) werden die aus Verfahrensschritt (2) resultierenden $SiO_2$-Teilchen auf einer Ablagerungsfläche abgeschieden. Die Ausgestaltung dieses Verfahrensschritts liegt im Können und Wissen des Fachmanns.

Hierzu werden die im Verfahrensschritt (2) gebildeten $SiO_2$-Teilchen auf einem rotierenden Träger schichtweise unter Bildung eines porösen Sootkörpers abgeschieden.

Während des Abscheidens der Soot-Teilchen wird der Abstand zwischen dem Brenner und dem Trägermaterial gegebenenfalls verändert, um die zuvor bereits beschriebene Voraussetzung zu erfüllen.

## Verfahrensschritt (4) - gegebenenfalls Trocknen und Verglasen

Im Verfahrensschritt (4) werden die aus Verfahrensschritt (3) resultierenden $SiO_2$-Teilchen unter Bildung von synthetischem Quarzglas gegebenenfalls getrocknet und verglast. Dieser Verfahrensschritt ist insbesondere dann notwendig, wenn die zuvor durchgeführten Verfahrensschritte gemäß einem Sootverfahren durchgeführt wurden. Die Ausgestaltung dieses Verfahrensschritts liegt im Können und Wissen des Fachmanns.

Das erfindungsgemäße Verfahren eignet sich zur Herstellung von synthetischem Quarzglas, welches als ein Außen- oder Innenabscheideverfahren durchgeführt wird. Wenn das erfindungsgemäße Verfahren als Außenabscheideverfahren durchgeführt wird, so handelt es sich bevorzugt um ein OVD-Verfahren (Outside Vapour Phase Deposition), VAD-Verfahren (Vapour Phase Axial Deposition) oder Soot-Boule-Verfahren.

Durch das erfindungsgemäße Verfahren lassen sich die Herstellungskosten für Quarzglas reduzieren.

Weiterer Gegenstand der vorliegenden Erfindung ist eine Vorrichtung zur Herstellung von synthetischem Quarzglas, wobei die erfindungsgemäße Vorrichtung umfasst:

(a) mindestens eine Verdampferzone zum Verdampfen mindestens eines Einsatzmaterials, das mindestens eine siliziumorganische Ausgangsverbindung enthält, unter Bildung eines Einsatzmaterialdampfes;

(b) mindestens eine Reaktionszone, in welche der Einsatzmaterialdampf aus Verfahrensschritt (a) geführt wird und in welcher das Einsatzmaterial durch Pyrolyse oder durch Hydrolyse zu $SiO_2$-Teilchen umgesetzt wird, wobei die Reaktionszone einen Brenner umfasst; und

(c) mindestens eine Abscheidezone mit einer Ablagerungszone für die aus der Reaktionszone (b) resultierenden $SiO_2$-Teilchen unter Bildung von synthetischem Quarzglas, wobei die Ablagerungszone einen Sootkörper umfasst.

Die erfindungsgemäße Vorrichtung ist dann dadurch gekennzeichnet, dass der Brenner eine Düse aufweist, die so ausgebildet ist, dass

- durch die Düse der Einsatzmaterialdampf zusammen mit Sauerstoff in die Reaktionszone eingespeist wird, und

- die Vorrichtung Mittel aufweist, mit welchen das Mengenverhältnis von Sauerstoff zu der siliziumhaltigen Ausgangsverbindung dergestalt eingestellt werden kann, dass die durchzuführende Umsetzung des Einsatzmaterialdampfs bei einer Luftzahl im Brenner von kleiner gleich 1,00 durchgeführt wird.

In Übereinstimmung mit den obigen Ausführungen zu dem erfindungsgemäßen Verfahren werden die Gasströme in dem Brenner der erfindungsgemäßen Vorrichtung, insbesondere die Menge an Sauerstoff als Brennstoff und an siliziumorganischer Ausgangsverbindung und eventuell brennbarer Hilfsgase, vorzugsweise so eingestellt, dass eine Luftzahl kleiner oder gleich 0,95 realisiert wird.

Für die Definition der Luftzahl wird auf obige Ausführungen verwiesen.

Im Rahmen der vorliegenden Erfindung kann der Einsatzmaterialdampf zusätzlich mit einem Trägergas verwendet werden.

In Übereinstimmung mit den obigen Ausführungen zu dem erfindungsgemäßen Verfahren werden die Gasströme in dem Brenner der erfindungsgemäßen Vorrichtung, insbesondere die Menge an Sauerstoff als Brennstoff und an siliziumorganischer Ausgangsverbindung und eventuell brennbarer Hilfsgase, vorzugsweise so eingestellt, dass eine Luftzahl kleiner oder gleich 0,90 realisiert wird.

In Übereinstimmung mit den obigen Ausführungen zu dem erfindungsgemäßen Verfahren werden die Gasströme in dem Brenner der erfindungsgemäßen Vorrichtung, insbesondere die Menge an Sauerstoff als Brennstoff und an siliziumorganischer Ausgangsverbindung und eventuell brennbarer Hilfsgase, vorzugsweise so eingestellt, dass eine Luftzahl kleiner oder gleich 0,85 realisiert wird.

In Übereinstimmung mit den obigen Ausführungen zu dem erfindungsgemäßen Verfahren werden die Gasströme in dem Brenner der erfindungsgemäßen Vorrichtung, insbesondere die Menge an Sauerstoff als Brennstoff und an siliziumorganischer Ausgangsverbindung und eventuell brennbarer Hilfsgase, vorzugsweise so eingestellt, dass eine Luftzahl kleiner oder gleich 0,80 realisiert wird.

In Übereinstimmung mit den obigen Ausführungen zu dem erfindungsgemäßen Verfahren werden die Gasströme in dem Brenner der erfindungsgemäßen Vorrichtung, insbesondere die Menge an Sauerstoff als Brennstoff und an siliziumorganischer Ausgangsverbindung und eventuell brennbarer Hilfsgase, vorzugsweise so eingestellt, dass eine Luftzahl kleiner oder gleich 0,78 realisiert wird.

In Übereinstimmung mit den obigen Ausführungen zu dem erfindungsgemäßen Verfahren werden die Gasströme in dem Brenner der erfindungsgemäßen Vorrichtung, insbesondere die Menge an Sauerstoff als Brennstoff und an siliziumorganischer Ausgangsverbindung und eventuell brennbarer Hilfsgase, vorzugsweise so eingestellt, dass eine Luftzahl kleiner oder gleich 0,76 realisiert wird.

Die erfindungsgemäße Vorrichtung ist vorzugsweise so ausgebildet, dass die Luftzahl vorzugsweise während mindestens 20 %, weiter bevorzugt mindestens 30 %, noch weiter bevorzugt mindestens 40 %, noch weiter bevorzugt mindestens 50 %, noch weiter bevorzugt mindestens 60 %, noch weiter bevorzugt mindestens 70 %, noch weiter bevorzugt mindestens 80 %, noch weiter bevorzugt mindestens 90 %, noch weiter bevorzugt mindestens 95 %, noch weiter bevorzugt mindestens 97 %, noch weiter bevorzugt mindestens 98 %, noch weiter bevorzugt mindestens 99 %, der zuvor definierten Aufbauzeit eingehalten wird.

Der Brenner der erfindungsgemäßen Vorrichtung weist vorzugsweise einen konzentrischen Querschnitt auf, wobei im Inneren des konzentrischen Querschnitts der Einsatzmaterialdampf zusammen mit Sauerstoff (und Inertgas als Trägergas) als Feed-Mix in die Brennerflamme eingeführt wird und der Feed-Mix durch ein Trenngas von dem Sauerstoff-enthaltenden Brenngas getrennt ist.

Schließlich betrifft die vorliegende Erfindung noch die Verwendung dieser Vorrichtung zur Herstellung von synthetischem Quarzglas.

**Ausführungsbeispiel**

Die Erfindung wird im Folgenden anhand von Ausführungsbeispielen und einer Zeichnung näher erläutert.

Ausführungsbeispiel:

Flüssiges Einsatzmaterial OMCTS wird zusammen mit Stickstoff als Trägergas, welches auf 180 °C vorgewärmt wurde, in einem Verdampfer gemäß der Ausgestaltung der Internationalen Patentanmeldung PCT/EP2012/075346 bei 170 °C verdampft. Das Stickstoff-OMCTS-Dampfgemisch wird zusammen mit Sauerstoff ($O_2$-Mix) in einen konzentrischen Brenner eingeführt, wobei die Versuche unter den nachfolgenden Bedingungen durchgeführt werden:

In dem Vergleichsbeispiel und den Versuchen 1 bis 3 wurde eine identische Menge an OMCTS pro Stunde in den Brenner eingeführt, wobei die Menge an $O_2$-Mix und $O_2$-Brenn angepasst wurden, um die in der nachstehenden Tabelle aufgeführte Luftzahl zu realisieren. Die Menge an $H_2$ und $N_2$ war ebenfalls identisch. Der Abstand zwischen Brenner und Körper war ebenfalls in allen Versuchen identisch.

|  | Vergleichsversuch 1 | Versuch 1 | Versuch 2 | Versuch 3 |
|---|---|---|---|---|
| OMCTS (kg/h) | konstant | konstant | konstant | konstant |
| Luftzahl λ | 1,23 | 1,00 | 0,81 | 0,78 |
| Effizienz | - | + | ++ | +++ |

Bedeutung:

-: schlechte Abscheideeffizienz

+: verbesserte Abscheideeffizienz

++: deutlich verbesserte Abescheideeffizienz

+++: stark verbesserte Abescheideeffizienz

Die Versuche 1 bis 3 und das Vergleichsbeispiel zeigen, dass mit der Herabsetzung der Luftzahl, d.h. mit einem zunehmend unterstöchiometrischen Verhältnis von Sauerstoff zu der siliziumhaltigen Ausgangsverbindung und eventuell brennbarer Hilfsgase, die Ausbeuteeffizienz des gattungsgemäßen Verfahrens gesteigert werden kann. Dabei sind insbesondere Luftzahlen bevorzugt, die deutlich niedriger sind als die aus der DE 10 2011 121 153 A bekannten Verhältnisse von Sauerstoff zu siliziumhaltiger Ausgangsverbindung und eventuell brennbarer Hilfsgase,

In den vorbeschriebenen Versuchen wird ein konzentrischer Brenner verwendet, wobei durch die innere Düse das sogenannte Feedgemisch in den Brennerbereich eingeführt wird. Das Feedgemisch besteht aus der polymerisierbaren Polyalkylsiloxanverbindung OMCTS, einem $N_2$-Trägergas und einem $O_2$-Mix. Die innere Düse des Brenners wird durch eine mittlere, um die innere Düse konzentrisch angeordnete Düse, aus welcher $H_2$-Gas als Trenngas in den Brennerbereich einströmt, umfasst. In der äußeren konzentrischen Düse wird der Sauerstoff als Brennmittel ($O_2$-Brenn) eingeführt.

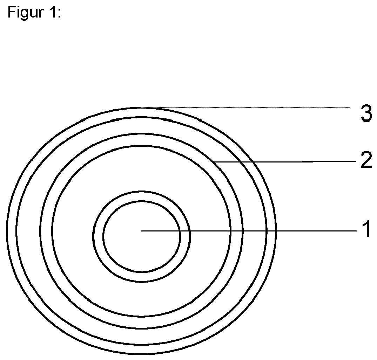

Die in diesem Ausführungsbeispiel verwendete Brennergeometrie ist in der Abbildung 1 dargestellt, in welcher

1: die innere Düse;

2: die mittlere Düse; und

3: die äußere Düse

darstellen.

Vergleichsversuch

Es wurde ausgehend von dem Versuch 4 gemäß Tabelle 1 der DE 10 2011 121 153 A in einem Vergleichsversuch die Luftzahl unter den Wert von 0,952 erniedrigt. In diesem Vergleichsversuch wird in der zentralen Feeddüse kein Sauerstoff zusammen mit OMCTS in den Brenner geführt. Die dabei erhaltenen Sootkörper waren aufgrund eines zu hohen Kohlenstoffgehalts unbrauchbar.

**Patentansprüche**

1. Verfahren zur Herstellung von synthetischem Quarzglas, **gekennzeichnet durch** die folgenden Verfahrensschritte:

    (1) Verdampfen eines Einsatzmaterials, das mindestens eine siliziumorganische Ausgangsverbindung enthält, unter Bildung eines Einsatzmaterialdampfes;
    (2) Zuführen des Einsatzmaterialdampfes zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Sootteilchen umgesetzt wird;
    (3) Abscheiden der aus Verfahrensschritt (2) resultierenden $SiO_2$-Sootteilchen auf einer Ablagerungsfläche unter Ausbildung eines Sootkörpers; und
    (4) gegebenenfalls Trocknen und Verglasen der aus Verfahrensschritt (3) resultierenden $SiO_2$-Teilchen unter Bildung von synthetischem Quarzglas;

    **dadurch gekennzeichnet, dass**
    dass die im Verfahrensschritt (2) durchzuführende Umsetzung des Einsatzmaterialdampfs bei einer Luftzahl im Brenner von kleiner gleich 1,00 durchgeführt wird.

2. Verfahren nach Anspruch 1, **dadurch gekennzeichnet, dass** die im Verfahrensschritt (2) verwendete Flamme zur Verbrennung des Einsatzmaterialdampfs eine Luftzahl von 0,95 oder kleiner aufweist.

3. Verfahren nach Anspruch 1 oder 2, **dadurch gekennzeichnet, dass** die im Verfahrensschritt (2) verwendete Flamme zur Verbrennung des Einsatzmaterialdampfs eine Luftzahl von 0,85 oder kleiner.

4. Verfahren nach einem der Ansprüche 1 bis 3, **dadurch gekennzeichnet, dass** die siliziumorganische Ausgangsverbindung zusammen in einem Feed mit Sauerstoff in den Brenner geführt wird.

5. Verfahren nach einem der Ansprüche 1 bis 4, **dadurch gekennzeichnet, dass** der Verfahrensschritt (2) mittels eines Brenners mit einem konzentrischen Querschnitt durchgeführt wird, wobei im Inneren des konzentrischen Querschnitts der Einsatzmaterialdampf zusammen mit Sauerstoff als Feed-Mix in die Brennerflamme eingeführt wird und der Feed-Mix durch ein nicht mit oxidativ wirkendes Trenngas von dem Sauerstoff-enthaltenden Oxidiergas getrennt ist.

6. Verfahren nach Anspruch 5, **dadurch gekennzeichnet, dass** das Trenngas mehr als 5 Vol.-% Wasserstoff enthält.

7. Verfahren nach einem der Ansprüche 1 bis 6, **dadurch gekennzeichnet, dass** die siliziumorganische Ausgangsverbindung ausgewählt wird aus der Gruppe, bestehend aus Hexamethylcyclotrisiloxan (D3), Octamethylcyclotetrasiloxan (D4), Dekamethylcyclopentasiloxan (D5), Decamethylcyclohexasiloxan (D6), Tetradekamethylcycloheptasiloxan (D7), Hexadecamethylcyclooctasiloxan (D8), deren linearen Homologen und beliebigen Mischungen der vorgenannten Verbindungen.

8. Verfahren nach einem der Ansprüche 1 bis 7, **dadurch gekennzeichnet, dass** sich die Gesamtmenge an Sauerstoff, die zur Umsetzung der siliziumorganischen Ausgangsverbindung und gegebenenfalls brennbarer Hilfsgase im Brenner verwendet wird, die Menge an Sauerstoff ist, die dem Brenner aktiv zugeführt wird.

9. Vorrichtung zur Herstellung von synthetischem Quarzglas, **dadurch gekennzeichnet, dass** die Vorrichtung umfasst:

(a) mindestens eine Verdampferzone zum Verdampfen mindestens eines Einsatzmaterials, das mindestens eine siliziumorganische Ausgangsverbindung enthält, unter Bildung eines Einsatzmaterialdampfes;
(b) mindestens eine Reaktionszone, in welche der aus Verfahrensschritt (a) resultierende Einsatzmaterialdampf geführt wird und in welcher das Einsatzmaterial durch Pyrolyse oder durch Hydrolyse zu $SiO_2$-Teilchen umgesetzt wird, wobei die Reaktionszone einen Brenner mit einer Flamme umfasst; und
(c) mindestens eine Abscheidezone mit einer Ablagerungszone für die aus der Reaktionszone (b) resultierenden $SiO_2$-Teilchen unter Bildung von synthetischem Quarzglas, wobei die Ablagerungszone einen Sootkörper umfasst,

**dadurch gekennzeichnet, dass** der Brenner eine Düse aufweist, die so ausgebildet ist, dass

- durch die Düse der Einsatzmaterialdampf zusammen mit Sauerstoff in die Reaktionszone eingespeist wird, und
- die Vorrichtung Mittel aufweist, mit welchen das Mengenverhältnis von Sauerstoff zu der siliziumorganischen Ausgangsverbindung dergestalt eingestellt werden kann, dass die durchzuführende Umsetzung des Einsatzmaterialdampfs bei einer Luftzahl im Brenner von kleiner gleich 1,00 durchgeführt wird.

10. Vorrichtung nach Anspruch 9, **dadurch gekennzeichnet, dass** die Vorrichtung einen Brenner umfasst, der mit einer Luftzahl kleiner oder gleich 0,95 betrieben wird.

11. Vorrichtung nach Anspruch 9 oder 10, **dadurch gekennzeichnet, dass** die Vorrichtung einen Brenner umfasst, der mit einer Luftzahl kleiner oder gleich 0,85 betrieben wird.

12. Vorrichtung nach einem der Ansprüche 9 bis 11, **dadurch gekennzeichnet, dass** die Vorrichtung einen Brenner umfasst, der mit einer Luftzahl kleiner oder gleich 0,76 betrieben wird.

13. Vorrichtung nach einem der Ansprüche 9 bis 12, **dadurch gekennzeichnet, dass** der Brenners einen konzentrischen Querschnitt aufweist, wobei im Inneren des konzentrischen Querschnitts der Einsatzmaterialdampf zusammen mit Sauerstoff als Feed-Mix in die Brennerflamme eingeführt wird und der Feed-Mix durch ein Trenngas von dem Sauerstoff-enthaltenden Oxidiergas getrennt ist.

14. Vorrichtung nach Anspruch 13, **dadurch gekennzeichnet, dass** das Trenngas mehr als 5 Vol.-% Wasserstoff enthält.

15. Verwendung einer Vorrichtung gemäß einem der Ansprüche 9 bis 14 zur Herstellung von synthetischem Quarzglas.

Figur 1:

**Europäisches Patentamt**
**European Patent Office**
**Office européen des brevets**

# EUROPÄISCHER RECHERCHENBERICHT

Nummer der Anmeldung

EP 20 21 4491

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2011 121153 B3 (HERAEUS QUARZGLAS [DE]) 21. März 2013 (2013-03-21) | 1-3,7,8 | INV. C03B19/14 C03B20/00 |
| Y | * Ansprüche 1,2,10; Abbildung 1; Tabelle 1 | 4 | |
| A | * | 5,6 | |
| | ----- | | |
| X | EP 3 549 921 A1 (SHIN-ETSU CHEMICAL CO, LTD) 9. Oktober 2019 (2019-10-09) | 9-12,15 | |
| Y | * Absätze [0025], [0026], [0029]; Abbildungen 1-4 * | 4 | |
| | ----- | | |
| X | EP 0 622 340 A1 (SHINETSU CHEMICAL CO [JP]; SHIN ETSU QUARTZ CO LTD [JP]) 2. November 1994 (1994-11-02) * Seite 6, Zeilen 8-14; Abbildung 1; Beispiele * | 9-12,15 | |
| | ----- | | |
| X | WO 99/20574 A1 (TSL GROUP PLC [GB]; SAYCE IAN GEORGE [GB]; WELLS PETER JOHN [GB]) 29. April 1999 (1999-04-29) * Seite 6, Zeilen 8-14; Abbildung 2; Beispiel 2 * | 9-15 | |
| | ----- | | |

**RECHERCHIERTE SACHGEBIETE (IPC)**

C03B

Der vorliegende Recherchenbericht wurde für alle Patentansprüche erstellt

| Recherchenort | Abschlußdatum der Recherche | Prüfer |
|---|---|---|
| Den Haag | 7. Mai 2021 | Creux, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 4491

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2021

| Im Recherchenbericht angeführtes Patentdokument | Datum der Veröffentlichung | Mitglied(er) der Patentfamilie | Datum der Veröffentlichung |
|---|---|---|---|
| DE 102011121153 B3 | 21-03-2013 | CN 103987670 A<br>DE 102011121153 B3<br>EP 2791070 A1<br>JP 6058693 B2<br>JP 2015505809 A<br>KR 20140095560 A<br>US 2014349830 A1<br>WO 2013087678 A1 | 13-08-2014<br>21-03-2013<br>22-10-2014<br>11-01-2017<br>26-02-2015<br>01-08-2014<br>27-11-2014<br>20-06-2013 |
| EP 3549921 A1 | 09-10-2019 | CN 110342807 A<br>EP 3549921 A1<br>JP 6793676 B2<br>JP 2019182668 A<br>US 2019300419 A1 | 18-10-2019<br>09-10-2019<br>02-12-2020<br>24-10-2019<br>03-10-2019 |
| EP 0622340 A1 | 02-11-1994 | DE 69401028 T2<br>EP 0622340 A1<br>JP 3007510 B2<br>JP H06305736 A | 10-04-1997<br>02-11-1994<br>07-02-2000<br>01-11-1994 |
| WO 9920574 A1 | 29-04-1999 | DE 69806628 T2<br>EP 1025054 A1<br>JP 2001520165 A<br>WO 9920574 A1 | 06-02-2003<br>09-08-2000<br>30-10-2001<br>29-04-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9010596 A
- US 20190084866 A
- DE 102011121153 A
- US 8230701 B

- WO 2013087751 A
- WO 2014187513 A
- DE 102013209673
- DE 102011121153
- EP 2012075346 W